# EUROPÄISCHE PATENTSCHRIFT

(11) **EP 3 247 659 B1**
(45) Veröffentlichungstag und Bekanntmachung des Hinweises auf die Patenterteilung: **21.08.2019**
(21) Anmeldenummer: 16700729.3
(22) Anmeldetag: 15.01.2016
(51) Int. Cl.: B65G 47/244, B65G 59/04, B65H 3/44

(54) **VERFAHREN UND VORRICHTUNG ZUM UMGANG MIT EINZELNEN ZWISCHENLAGEN**
METHOD AND DEVICE FOR HANDLING INDIVIDUAL INTERMEDIATE LAYERS
PROCÉDÉ ET DISPOSITIF POUR MANIPULER DES COUCHES INTERMÉDIAIRES INDIVIDUELLES

(30) Priorität: 19.01.2015 DE 102015200734
(43) Veröffentlichungstag der Anmeldung: 29.11.2017
(73) Patentinhaber: Krones Aktiengesellschaft, 93073 Neutraubling (DE)
(72) Erfinder: SEMMELROCK, Albin, 93073 Neutraubling (DE); DIENER, Bernhard, 93073 Neutraubling (DE); BEER, Erhard, 93073 Neutraubling (DE); HECKEL, Gerald, 93073 Neutraubling (DE); KOLLMUSS, Manuel, 93073 Neutraubling (DE); OSTERHAMMER, Martin, 93073 Neutraubling (DE)
(74) Vertreter: Benninger, Johannes
(86) Internationale Anmeldenummer: PCT/EP2016/050728
(87) Internationale Veröffentlichungsnummer: WO 2016/116361

(56) Entgegenhaltungen:
- DE-A1- 4 028 981
- JP-A- 2008 200 744
- US-A- 4 228 886
- US-A- 4 797 169
- US-A1- 2010 232 923

## Beschreibung

Die vorliegende Erfindung betrifft ein Verfahren und eine Vorrichtung zum Umgang mit einzelnen Zwischenlagen.

Aus dem Stand der Technik sind bereits automatisierte Palettiervorrichtungen bekannt, welche mehrere Artikel auf einer Palette anordnen und die Artikel der jeweiligen Palette abschließend mittels Stretchfolie umhüllen.

Bei derartigen Paletten sind vorzugsweise mehrere Lagen an Artikeln auf der jeweiligen Palette übereinander angeordnet, um eine große Anzahl an Artikeln auf der jeweiligen Palette platzieren zu können. Die Artikel können beispielsweise durch Gebinde mit mehreren Getränkebehältnissen ausgebildet sein. Derartige Artikel besitzen häufig eine komplexe Geometrie, so dass eine Stapelung mit mehreren Lagen nicht immer ohne hiermit einhergehender Probleme hinsichtlich der Stabilität der gesamten Palettenzusammenstellung möglich ist. Insbesondere während des Transportes der Palette ist es notwendig, eine gewisse Stabilität für die Palettenzusammenstellung gewährleisten zu können, um ein Kippen der jeweiligen Artikel mit Gewissheit ausschließen zu können.

Um die Stabilität der Palettenzusammenstellung zu erhöhen bzw. um eine ausreichende Stabilität für die Palettenzusammenstellung gewährleisten zu können, ist aus dem Stand der Technik bekannt, für aufeinanderstehende Artikel sog. Zwischenlagen vorzusehen. Derartige Zwischenlagen können sich zumindest näherungsweise über die gesamte Palettenbreite erstrecken, so dass sämtliche Artikel auf einer derartigen Zwischenlage aufstehen. Bekannte Zwischenlagen sind beispielsweise aus Papier, Kartonage, Pappe, Wellpappe oder aus ähnlichen Materialien gebildet. Aufgrund ihrer Steifigkeit wird mittels der Zwischenlagen jeweils eine stabile Aufstandsfläche für übereinander angeordnete Artikellagen bereitgestellt. Auch kann es sein, dass für eine Ebene der Palette mehrere Zwischenlagen bereitgestellt werden bzw. dass eine Ebene der Palette durch mehrere Zwischenlagen gebildet wird, auf welchen die Artikel aufstehen.

Für automatisierte Prozesse der Palettierung ist es notwendig, dass Zwischenlagen schnell und in großer Anzahl zur Verfügung stehen. Bekannt sind daher Zwischenlagenstapel, die eine Vielzahl von derartigen Zwischenlagen umfassen.

Bevor die jeweiligen Zwischenlagen auf der Palette platziert werden, ist es notwendig, einzelne Zwischenlagen vom Stapel abzutrennen bzw. die Zwischenlagen zu vereinzeln. Hierzu ist aus dem Stand der Technik eine Vielzahl von Vorrichtungen bekannt, mittels welcher ein derartiges Abtrennen einzelner Zwischenlagen von einem Stapel erfolgt.

Beispielsweise offenbart eine derartige Vorrichtung die DE 10 2004 031 301 A1. Bei Vorrichtung der DE-Patentanmeldung wird ein Stapel an Zwischenlagen zur Verfügung gestellt und über einen Greifer mit Saugnäpfen aufgenommen. Anschließend wird die Zwischenlage durch den Greifer angehoben und auf der jeweiligen Palette abgesetzt. Nach Absetzen wird der Greifer zurückgefahren, um die nächste Zwischenlage abzuholen.

Die DE 40 28 981 A1 offenbart zudem ein Verfahren nach dem Oberbegriff des Anspruchs 1 und eine Einrichtung zum Positionieren von Werkstücken nach dem Oberbegriff des Anspruchs 11, welche durch textile Zuschnitte ausgebildet sind. Über einen an einer Brücke angeordneten Greifer oder von Hand wird ein jeweiliger textiler Zuschnitt auf einem Tisch abgelegt. Dort erkennt eine Kamera die Kontur des jeweiligen auf dem Tisch abgelegten textilen Zuschnittes.

Die Praxis hat gezeigt, dass einzelne Zwischenlagen des Stapels verrutschen können bzw. insbesondere nach mehreren aufeinanderfolgenden Abnahmen einzelner Zwischenlagen vom Stapel nicht mehr vollständig bündig zueinander ausgerichtet sind. Wird die Zwischenlage sodann auf die Palette aufgesetzt, so kann ihre Position nicht genau mit einer für die jeweilige Zwischenlage vorgesehenen Soll-Position übereinstimmen. Auch kann es sein, dass die Zwischenlage vom Greifer nicht exakt an einer vorgesehenen Position entgegengenommen wird, womit ebenso eine nicht exakte Positionierung auf der jeweiligen Palette einhergeht. Paletten, bei welchen die Zwischenlagen nicht exakt positioniert sind, können zu Instabilitäten neigen.

Insbesondere können sich derartige Probleme bei Paletten ergeben, bei welchen die Zwischenlagen als sog. Halblagen ausgebildet sind. Mehrere Zwischenlagen bzw. Halblagen bilden hierbei gemeinsam eine Ebene auf der Palette aus, auf welcher mehrere Artikel aufstehen. Um die Stabilität der Palette gewährleisten zu können, um einen unerwünschten seitlichen Überstand der Halblagen über die Palette zu vermeiden und um Problemen bei der Palettierung entgegenzuwirken, wären Vorrichtungen wünschenswert, bei welchen die Zwischenlagen bzw. sog. Halblagen problemlos und möglichst exakt auf der jeweiligen Palette abgesetzt werden können bzw. möglichst positionsgenau zur Ablage auf der jeweiligen Palette bereitstehen.

Eine Aufgabe der vorliegenden Erfindung kann aus diesem Grunde darin gesehen werden, ein Verfahren und eine Vorrichtung zur Verfügung zu stellen, welche zur exakten Positionierung mehrerer Zwischenlagen auf zugeordneten Paletten beitragen. Die Vorrichtung soll zudem einen unkomplizierten Aufbau besitzen. Weiter soll das Verfahren einfach umgesetzt werden können. Darüber hinaus sollen sich das Verfahren sowie die Vorrichtung durch einen hohen Durchsatz auszeichnen.

Die obigen Aufgaben werden durch ein Verfahren und eine Vorrichtung gelöst, welche die Merkmale in den Ansprüchen 1 und 11 umfassen. Weitere vorteilhafte Ausgestaltungen werden durch die Unteransprüche beschrieben.

Die Erfindung betrifft ein Verfahren zum Umgang mit einzelnen Zwischenlagen. Im Rahmen eines ersten Schrittes des erfindungsgemäßen Verfahrens, welcher sinnvollerweise den folgenden Schritten zeitlich vorausgehen kann, wird von wenigstens zwei separaten Zwischenlagenstapeln jeweils eine einzelne zuoberst auf dem jeweiligen Zwischenlagenstapel angeordnete Zwischenlage abgetrennt. Insbesondere können zwei Zwischenlagenstapel vorgesehen sein, die benachbart zueinander positioniert sind und von welchen zumindest näherungsweise zeitgleich jeweils eine Zwischenlage abgetrennt wird. Eine jeweilige zuoberst auf einem ersten Zwischenlagenstapel angeordnete Zwischenlage und eine jeweilige zuoberst auf einem zweiten Zwischenlagenstapel angeordnete Zwischenlage können bei Palettierung gemeinsam eine Ebene bzw. Standfläche für Artikel bereitstellen. Die Zwischenlagen der wenigstens zwei Zwischenlagenstapel können somit als sog. Halblagen ausgebildet sein.

Um die Zwischenlagen vom jeweiligen Zwischenlagenstapel abzutrennen, können die einzelnen Zwischenlagen beispielsweise über mindestens zwei unabhängig voneinander bewegbare Saug- und/oder Greifeinrichtung erfasst werden und zeitlich hierauf folgend durch ein Verfahren der Saug- und/oder Greifeinrichtung vom Zwischenlagenstapel abgezogen werden. Die Saug- und/oder Greifeinrichtungen können vor Abziehen der Zwischenlage zunächst ein Anheben ihrer jeweiligen Zwischenlage vom Zwischenlagenstapel bewirken. Die Saug- und/oder Greifeinrichtungen können hierbei zunächst eine Vorderkante ihrer jeweiligen Zwischenlage anheben, während eine Rückkante ihrer jeweiligen Zwischenlage in Kontakt mit dem jeweiligen Zwischenlagenstapel verbleibt und erst bei Abziehen der jeweiligen Zwischenlage vom jeweiligen Zwischenlagenstapel ihren Kontakt zum Zwischenlagenstapel verliert. Die jeweilige Zwischenlage kann hierbei zumindest bereichsweise gebogen bzw. konkav verformt werden. Hierdurch wird die Zwischenlage effektiv vom jeweiligen Zwischenlagenstapel getrennt, ohne dass weitere Zwischenlagen an der vom jeweiligen Zwischenlagenstapel abzutrennenden Zwischenlage haften bleiben.

Im Rahmen eines weiteren Schrittes des erfindungsgemäßen Verfahrens werden die von den wenigstens zwei separaten Zwischenlagenstapeln abgetrennten einzelnen Zwischenlagen in einen Erfassungsbereich einer Sensorik bewegt, wobei jede der abgetrennten Zwischenlagen in einen Erfassungsbereich einer eigenen Sensorik eintritt. Die Erfassungsbereiche können sich hierbei ggf. nicht überschneiden. Jedem der Zwischenlagenstapel bzw. der Zwischenlagen eines jeden Stapels kann somit eine eigene Sensorik zugeordnet sein. Die jeweilige eigene Sensorik erkennt sodann eine in Bewegungsrichtung der jeweiligen Zwischenlage verlaufende Außenkante mittels vorzugsweise optischer Erfassung. Somit kann eine erste Sensorik die Außenkante einer ersten Zwischenlage eines ersten Zwischenlagenstapels erkennen, wobei eine zweite Sensorik die Außenkante einer zweiten Zwischenlage eines zweiten Zwischenlagenstapels erkennt.

Die in Bewegungsrichtung der jeweiligen Zwischenlage verlaufende Außenkante kann an die vorherig erwähnte Rückkante und die vorherig erwähnte Vorderkante jeweils anschließen. In besonders bevorzugten Ausführungsformen besitzen die Zwischenlagen der wenigstens zwei separaten Zwischenlagenstapel jeweils gegenüberliegende quadratische Breitseitenflächen, wobei zwei gegenüberliegende Außenkanten sowie die Vorderkante und die Rückkante den Umfangsverlauf ausbilden.

Denkbar ist beispielsweise, dass die jeweilige Sensorik ein Kamerasystem umfasst, um die in Bewegungsrichtung der jeweiligen Zwischenlage verlaufende Außenkante zu erkennen. Für besonders bevorzugte Ausführungsformen ist jedoch vorstellbar, dass die in Bewegungsrichtung der jeweiligen Zwischenlage verlaufende Außenkante, wie nachfolgend noch detailliert beschrieben, mittels einer Lichtschranke bzw. mittels eines Lasers optisch erfasst wird. Die Erfindung ist jedoch nicht auf derartige Ausführungsformen beschränkt, so dass für den angesprochenen Fachmann weitere Möglichkeiten bestehen, die in Bewegungsrichtung der jeweiligen Zwischenlage verlaufende Außenkante optisch zu erkennen.

Vorstellbar ist beispielsweise, dass die jeweilige Zwischenlage noch nicht vollständig vom jeweiligen Zwischenlagenstapel abgezogen ist bzw. noch bereichsweise auf dem Zwischenlagenstapel aufliegt und hierbei in den Erfassungsbereich der jeweiligen Sensorik gelangt. Auch kann es sein, dass die jeweilige Zwischenlage zunächst vollständig vom jeweiligen Zwischenlagenstapel abgezogen wird bzw. keinen Kontakt zum Zwischenlagenstapel mehr besitzt und hierauf folgend in den Erfassungsbereich der jeweiligen Sensorik bewegt wird. Das Abziehen und die Bewegung in den Erfassungsbereich der jeweiligen Sensorik können weiterhin über eine Greif- und/oder Saugeinrichtung erfolgen, welche die jeweilige Zwischenlage während der vorzugsweise optischen Erfassung ihrer Außenkante bewegt und hält. Die Zwischenlagen werden demnach erfindungsgemäß bei vorzugsweise optischer Erfassung ihrer jeweiligen Außenkante bewegt bzw. stehen nicht still.

Zudem ist vorgesehen, dass die die abgetrennten einzelnen Zwischenlagen zeitlich hierauf einen jeweiligen Zielort unter Berücksichtigung der jeweiligen vorzugsweise optischen Erfassung anfahren, so dass die Zwischenlagen ihren jeweiligen Zielort mit vorbestimmter Position erreichen. Demnach können die Zwischenlagen nach jeweiliger vorzugsweise optischer Erfassung ihren jeweiligen Zielort mit einer bestimmten Bewegungsrichtung und unter Berücksichtigung der jeweiligen vorzugsweise optischen Erfassung anfahren. Die Zwischenlagen können weiterhin von den mindestens zwei Saug- und/oder Greifeinrichtungen an den jeweiligen Zielort überführt bzw. via die mindestens zwei Saug- und/oder Greifeinrichtungen aus dem Erfassungsbereich der jeweiligen Sensorik in Richtung des Zielortes bewegt werden. In besonders bevorzugten Ausführungsformen können die Zwischenlagen, ggf. über die mindestens zwei Saug- und/oder Greifeinrichtungen, beginnend mit dem Abziehen und bis zur Überführung an den Zielort, kontinuierlich und unterbrechungsfrei bewegt werden.

Durch das erfindungsgemäße Verfahren, bei welchem das Anfahren des jeweiligen Zielortes unter Berücksichtigung der vorzugsweise optischen Erfassung erfolgt, entspricht die Position der Zwischenlagen am jeweiligen Zielort sehr genau einer gewünschten Soll-Position bzw. stimmt mit einer vorgegebenen Soll-Position zumindest näherungsweise überein. Die Übergabe von Zwischenlagen auf die jeweilige Palette kann hierbei mit hoher Präzision erfolgen, so dass stabile Paletten unter Zuhilfenahme des erfindungsgemäßen Verfahrens bzw. der erfindungsgemäßen Vorrichtung zusammengestellt werden können. Auch können Probleme bei Palettierung, welche beispielsweise aufgrund einer ungenauen Position der Zwischenlagen auf der Palette entstehen, mit dem erfindungsgemäßen Verfahren und der erfindungsgemäßen Vorrichtung vermieden werden.

Für diverse Ausführungsformen ist denkbar, dass eine Palette am Zielort angeordnet ist, so dass die Zwischenlagen am Zielort direkt auf der Palette abgelegt werden. Das Ablegen der Zwischenlagen am jeweiligen Zielort bzw. auf der Palette kann ggf. durch die mindestens zwei Saug- und/oder Greifeinrichtungen erfolgen. In besonders bevorzugten Ausführungsformen werden die Zwischenlagen jedoch am jeweiligen Zielort entgegengenommen bzw. durch die Saug- und/oder Greifeinrichtungen an weitere Transportmittel übergeben. Beispielsweise kann es sein, dass die Zwischenlagen am Zielort durch ein oder mehrere verfahrbare Klemmelemente entgegengenommen und in Richtung eines Übergabeplatzes gezogen werden. Die Saug- und/oder Greifeinrichtungen können ihre Verbindung zu den Zwischenlagen nach Entgegennahme durch die ein oder mehreren verfahrbaren Klemmelemente lösen und hierauf in Richtung des jeweiligen Zwischenlagenstapels zurückbewegt werden.

Vorstellbar ist zudem, dass die ein oder mehreren verfahrbaren Klemmelemente horizontal bewegt werden und die Zwischenlagen in Richtung eines Übergabeplatzes ziehen. Der Übergabeplatz kann eine horizontale Auflage für die Zwischenlagen bereitstellen. Im Bereich des Übergabeplatzes können die ein oder mehreren verfahrbaren Klemmelemente ihre Verbindung zur jeweiligen Zwischenlage lösen. Vom Übergabeplatz können die Zwischenlagen bzw. Halblagen beispielweise durch eine Handhabungseinrichtung aufgenommen und auf der zugeordneten Palette abgelegt werden. Die Klemmelemente können sodann in Richtung des jeweiligen Zielortes zurückbewegt werden und dort weitere Zwischenlagen von den mindestens zwei Saug- und/oder Greifeinrichtung entgegennehmen. Insbesondere haben sich in der Praxis Ausführungsformen bewährt, bei welchen die ein oder mehreren Klemmelemente linear verfahren werden. Für die Handhabungseinrichtung haben sich insbesondere Ausführungsformen bewährt, welche die Zwischenlagen via Unterdruck fixieren und auf der jeweiligen Palette absetzen. Auch sind Handhabungseinrichtungen vorstellbar, welche die Zwischenlagen mechanisch und beispielsweise mittel Greiffingern erfassen und hierauf folgend auf der Palette ablegen.

Insbesondere haben sich Ausführungsformen bewährt, bei welchen zeitlich vor Abtrennen einzelner Zwischenlagen ihre an die Außenkante anschließende Vorderkante sowie ihre an die Außenkante anschließende Rückkante ausgerichtet werden. Derartige Ausführungsformen tragen weiterhin dazu bei, eine exakte Positionierung von Zwischenlagen auf Paletten zu ermöglichen. Das Ausrichten kann derart erfolgen, dass hierdurch mehrere zuoberst auf dem jeweiligen Zwischenlagenstapel positionierte Zwischenlagen im Wesentlichen bündig zueinander orientiert sind bzw. bündig aufeinanderliegen. Somit kann nach Ausrichten eine Ist-Position der Vorderkante mit einer Soll-Position zumindest näherungsweise übereinstimmen.

In der Praxis haben sich Ausführungsformen bewährt, bei welchen zum Ausrichten mindestens zwei zustellbare Anschläge gegen die Vorder- und Rückkanten mehrerer Zwischenlagen der wenigstens zwei Zwischenlagenstapel jeweils geführt werden, so dass hierdurch die mehreren Zwischenlagen der wenigstens zwei Zwischenlagenstapel jeweils bündig zueinander ausgerichtet sind. Die mindestens zwei zustellbaren Anschläge können während ihrer Zustellbewegung und während ihres Kontaktes mit den Zwischenlagen parallel zueinander orientiert sein. Insbesondere kann vorgesehen sein, dass ein zur vorderbündigen Ausrichtung von Zwischenlagen vorgesehener Anschlag und ein zur rückbündigen Ausrichtung von Zwischenlagen vorgesehener Anschlag sowohl mehrere Zwischenlagen eines ersten Zwischenlagenstapels als auch mehrere Zwischenlagen eines zweiten Zwischenlagenstapels bündig zueinander ausrichten.

Zudem kann vorgesehen sein, dass die abgetrennte Zwischenlage in den Erfassungsbereich der jeweils eigenen Sensorik zeitsynchron mit einer ersten Richtungskomponente bewegt werden, die in Richtung des Zielortes weist und mit einer zweiten Richtungskomponente, die lotrecht zur ersten Richtungskomponente orientiert ist. Die Zwischenlagen können demnach schräg und in Richtung weg ihres jeweiligen Zwischenlagenstapels vom jeweiligen Zwischenlagenstapel abgezogen werden. Der Erfassungsbereich der jeweiligen Sensorik kann demnach in Abzugsrichtung der jeweiligen Zwischenlage versetzt und seitlich des jeweiligen Zwischenlagenstapels positioniert sein.

Weiter können die in Bewegungsrichtung der abgetrennten Zwischenlagen verlaufenden Außenkanten mittels einer Lichtschranke optisch erfasst werden. Die Lichtschranken können jeweils eine Quelle bzw. einen Sender umfassen, der Strahlung in Richtung eines Empfängers sendet bzw. emittiert. Die jeweilige Quelle kann als Laser ausgebildet sein. Somit können die Lichtschranken zur optischen Erfassung der in Bewegungsrichtung der Zwischenlagen verlaufenden Außenkanten einen Lasterstrahl emittieren. Die Zwischenlagen können über ihre Außenkanten in die jeweilige Strahlung eintreten und hierbei die Strahlung zumindest anteilig unterbrechen. Der jeweilige Empfänger kann sodann eine mit der jeweiligen Sensorik in Verbindung stehende Steuerungseinrichtung über eine Ist-Position der Außenkanten informieren, welche Steuerungseinrichtung die weitere Bewegungsrichtung der Zwischenlagen bzw. ggf. der mindestens zwei Saug- und/oder Greifeinrichtungen in Richtung des jeweiligen Zielortes vorgibt, so dass die Zwischenlagen ihren jeweiligen Zielort mit vorbestimmter Position erreichen.

In weiteren denkbaren Ausführungsformen können alternativ oder ergänzend zu Lichtschranken beispielsweise Tastsensoren Verwendung finden, um die Außenkante der Zwischenlage zu erkennen. Auch sind Ausführungsformen denkbar, bei welchen kapazitive Sensoren und/oder Ultraschallsensoren Verwendung finden, um die Außenkante der Zwischenlage zu erkennen.

Die jeweilige vorbestimmte Position kann für Zwischenlagen derart gewählt sein, dass die Zwischenlagen am vorbestimmten Zielort einen definierten Abstand bzw. Spalt zueinander aufweisen. Die Zwischenlagen bzw. Halblagen können sodann an eine Palette überführt werden. Der definierte Abstand bzw. der Spalt zwischen den wenigstens zwei Zwischenlagen kann nach Überführung der Zwischenlagen auf die zugeordnete Palette weiterhin ausgebildet sein. Zudem ist für weitere Ausführungsformen vorstellbar, dass kein Abstand bzw. kein Spalt zwischen den Zwischenlagen am Zielort ausgebildet ist, so Zwischenlagen am Zielort direkt aneinander angrenzen, wobei ihre benachbarten Außenkanten ggf. miteinander in Oberflächenkontakt stehen. In besonders bevorzugten Ausführungsformen kann vorgesehen sein, dass die zwei oder mehr als zwei Zwischenlagen nach Erreichen des jeweiligen Zielortes zwischen ihren direkt benachbarten Außenkanten einen Abstand ausbilden, welcher Abstand entlang ihrer direkt benachbarten Außenkanten durchgehend konstant verläuft.

Zudem kann vorgesehen sein, dass von den wenigstens zwei separaten Zwischenlagenstapeln einzelne Zwischenlagen zumindest näherungsweise zeitsynchron abgetrennt werden. Auch ist denkbar, dass die von den wenigstens zwei separaten Zwischenlagenstapeln abgetrennten Zwischenlagen zumindest näherungsweise zeitsynchron in den Erfassungsbereich der eigenen Sensorik eintreten und/oder dass die abgetrennten einzelnen Zwischenlagen zumindest näherungsweise zeitsynchron ihren jeweiligen Zielort anfahren.

Die vorliegende Erfindung betrifft darüber hinaus eine Vorrichtung zum Umgang mit einzelnen Zwischenlagen eines Zwischenlagenstapels. Merkmale, welche vorhergehend zu denkbaren Ausführungsformen des Verfahrens beschrieben wurden, können ebenso bei denkbaren Ausführungsformen der erfindungsgemäßen Vorrichtung vorgesehen sein. Weiter können Merkmale, welche nachfolgend zu denkbaren Ausführungsformen der erfindungsgemäßen Vorrichtung beschrieben werden, bei denkbaren Ausführungsformen des erfindungsgemäßen Verfahrens vorgesehen sein.

Die erfindungsgemäße Vorrichtung umfasst mindestens zwei unabhängig voneinander bewegbare Saug- und/oder Greifeinrichtungen zum jeweiligen Abtrennen einer einzelnen Zwischenlage von einem Zwischenlagenstapel und Überführen der abgetrennten Zwischenlage an einen Zielort. Jede der mindestens zwei unabhängig voneinander bewegbaren Saug- und/oder Greifeinrichtungen ist zum Abtrennen einer einzelnen Zwischenlage von einem eigenen Zwischenlagenstapel ausgebildet.

Die mindestens zwei Saug- und/oder Greifeinrichtung können demnach vom jeweiligen Zwischenlagenstapel bzw. von einem jeweiligen Bereitstellungsplatz für den Zwischenlagenstapel und dem Zielort hin- und her bewegt werden. In besonders bevorzugten Ausführungsformen können die mindestens zwei Saug- und/oder Greifeinrichtungen jeweils einen oder mehrere Saugköpfe umfassen, mittels welcher die jeweilige Zwischenlage an der jeweiligen Saug- und/oder Greifeinrichtung temporär fixiert werden kann.

Die erfindungsgemäße Vorrichtung umfasst zudem eine eigene Sensorik für jede der mindestens zwei Saug- und/oder Greifeinrichtungen, über welche eine jeweilige in Bewegungsrichtung der abgetrennten Zwischenlagen verlaufende Außenkante mittels vorzugsweise optischer Erfassung erkennbar ist. Weiter ist eine Steuerungseinrichtung vorgesehen, die mit den mindestens zwei Saug- und/oder Greifeinrichtungen und ihrer jeweiligen Sensorik in Verbindung steht, wobei von der Steuerungseinrichtung die Bewegungsrichtungen der mindestens zwei Saug- und/oder Greifeinrichtungen unabhängig voneinander und unter Berücksichtigung der vorzugsweise optischen Erfassungen derart vorgegeben werden können, dass die Zwischenlagen ihren Zielort jeweils mit vorbestimmter Position erreichen.

Durch die erfindungsgemäße Vorrichtung mit Sensorik, mindestens zwei Saug- und/oder Greifeinrichtungen und ihre Koppelung an die Steuerungseinrichtung können die Zwischenlagen ihren jeweiligen Zielort sehr genau mit einer bestimmten Soll-Position erreichen. Dies ist auch dann möglich, wenn eine zuoberst auf dem Zwischenlagenstapel befindliche Zwischenlage seitlich vom Zwischenlagenstapel übersteht.

In besonders bevorzugten Ausführungsformen kann zudem vorgesehen sein, dass die eigene Sensorik wenigstens einer der mindestens zwei Saug- und/oder Greifeinrichtungen eine oder mehrere Lichtschranken umfasst. Insbesondere können die eine oder die mehreren Lichtschranken der jeweiligen Sensorik wenigstens einen als Laser ausgebildeten Sender umfassen. In bevorzugten Ausführungsformen kann die die eigene Sensorik sinnvollerweise örtlich getrennt von der jeweiligen Saug- und/oder Greifeinrichtung positioniert sein bzw. sich örtlich zwischen dem jeweiligen Zielort und dem jeweiligen Zwischenlagenstapel befinden.

Auch kann vorgesehen sein, dass die Vorrichtung wenigstens zwei Anschläge umfasst, die mittels einer durch die Steuerungseinrichtung initiierten Zustellbewegung zur vorderbündigen Ausrichtung mit mehreren zuoberst auf den Zwischenlagenstapeln angeordneten Zwischenlagen in Kontakt gebracht werden können. Weiter ist denkbar, dass die Steuerungseinrichtung eine Bewegung der mindestens zwei Saug- und/oder Greifeinrichtungen derart steuern kann, dass die Zwischenlagen ihren jeweiligen Zielort zumindest näherungsweise zeitsynchron erreichen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Ansicht einer Ausführungsform einer erfindungsgemäßen Vorrichtung und verdeutlicht einen ersten Schritt einer Ausführungsform eines erfindungsgemäßen Verfahrens;
Figur 2 zeigt die schematische Ansicht der Ausführungsform einer erfindungsgemäßen Vorrichtung aus Figur 1 und verdeutlicht einen zweiten Schritt einer Ausführungsform eines erfindungsgemäßen Verfahrens;
Figur 3 zeigt die schematische Ansicht der Ausführungsform einer erfindungsgemäßen Vorrichtung aus den Figuren 1 und 2 und verdeutlicht einen dritten Schritt einer Ausführungsform eines erfindungsgemäßen Verfahrens;
Figur 4 zeigt die schematische Ansicht der Ausführungsform einer erfindungsgemäßen Vorrichtung aus den Figuren 1 bis 3 und verdeutlicht einen vierten Schritt einer Ausführungsform eines erfindungsgemäßen Verfahrens;
Figur 5 zeigt die schematische Ansicht der Ausführungsform einer erfindungsgemäßen Vorrichtung aus den Figuren 1 bis 4 und verdeutlicht einen fünften Schritt einer Ausführungsform eines erfindungsgemäßen Verfahrens.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

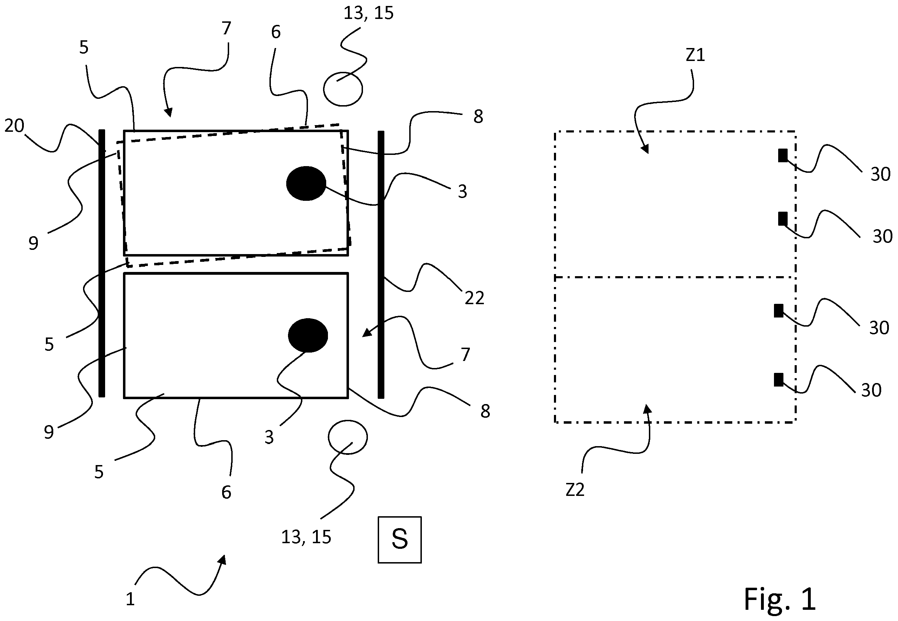

Figur 1 zeigt eine schematische Ansicht einer Ausführungsform einer erfindungsgemäßen Vorrichtung 1 und verdeutlicht einen ersten Schritt einer Ausführungsform eines erfindungsgemäßen Verfahrens. Die Vorrichtung 1 ist vorgesehen zum Umgang mit Zwischenlagen 5. Die Zwischenlagen 5 sind vorliegend als Halblagen ausgebildet und auf zwei benachbarten Zwischenlagenstapeln 7 platziert. Die Zwischenlagen 5 des unteren Zwischenlagenstapels 7 sind bündig zueinander orientiert. Die zuoberst auf dem weiteren Zwischenlagenstapel 7 angeordnete Zwischenlage 5, welche in Figur 1 in Phantomlinien dargestellt ist, besitzt keine bündige Ausrichtung zu den weiteren Zwischenlagen 5 des Zwischenlagenstapels 7, auf welchen sie aufliegt.

Die Vorrichtung 1 umfasst zudem zwei verfahrbare Saug- und/oder Greifeinrichtungen 3, wobei jeder Saug- und/oder Greifeinrichtung 3 ein eigener Zwischenlagenstapel 7 zugeordnet ist, von welchem die jeweilige Saug- und/oder Greifeinrichtung 3 Zwischenlagen 5 abtrennt. Die Saug- und/oder Greifeinrichtungen 3 stehen mit einer Steuerungseinrichtung S in Verbindung, welche die Bewegung der Saug- und/oder Greifeinrichtungen 3 vorgibt. Vorliegend besitzen die Saug- und/oder Greifeinrichtungen 3 jeweils einen oder mehrere Saugköpfe, die in den Figuren vorliegender Patentanmeldung nicht zu erkennen sind und mittels welcher die Saug- und/oder Greifeinrichtungen 3 Zwischenlagen 5 fixieren.

Die Saug- und/oder Greifeinrichtungen 3 können verfahren bzw. in Richtung eines jeweiligen Zielortes Z1 bzw. Z2 bewegt werden. So transportiert eine erste der beiden Saug- und/oder Greifeinrichtungen 3 Zwischenlagen 5 von ihrem jeweils zugeordneten Zwischenlagenstapel 7 in Richtung des ersten Zielortes Z1, während die weitere der beiden Saug- und/oder Greifeinrichtungen 3 Zwischenlagen 5 von ihrem jeweils zugeordneten Zwischenlagenstapel 7 in Richtung des weiteren Zielortes Z2 transportiert. Die Saug- und/oder Greifeinrichtungen 3 können bei ihrer Bewegung in Richtung des jeweiligen Zielortes Z1 bzw. Z2 einer eigenen Bewegungsrichtung folgen, die von der Steuerungseinrichtung S vorgegeben wird. Bei mehrmaligem Abziehen einzelner Zwischenlagen 5 vom jeweiligen Zwischenlagenstapel 7 kann hierbei die Bewegungsrichtung, entlang welcher die jeweilige Saug- und/oder Greifeinrichtung 3 verfährt, unterschiedlich ausgebildet sein, um die jeweilige Zwischenlage 5 mit vorbestimmter Position an ihren jeweiligen Zielort Z1 bzw. Z2 überführen zu können. Sowohl im Bereich des ersten Zielortes Z1 als auch im Bereich des zweiten Zielortes Z2 sind Klemmelemente 30 vorgesehen, welche die Zwischenlagen 5 von den Saug- und/oder Greifeinrichtungen 3 entgegennehmen und in Richtung eines in den Figuren vorliegender Patentanmeldung nicht mit dargestellten Übergabeplatzes ziehen, der eine horizontale Auflage für die Zwischenlagen 5 bereitstellt. Von dort werden die Zwischenlagen 5 von einer Handhabungseinrichtung (nicht dargestellt) erfasst und auf einer Palette abgelegt. Zwei Zwischenlagen 5 bzw. beide von den Saug- und/oder Greifeinrichtungen 3 erfassten Zwischenlagen 5 bilden hierbei gemeinsame eine Ebene einer Palette aus, auf welcher Artikel platziert werden können.

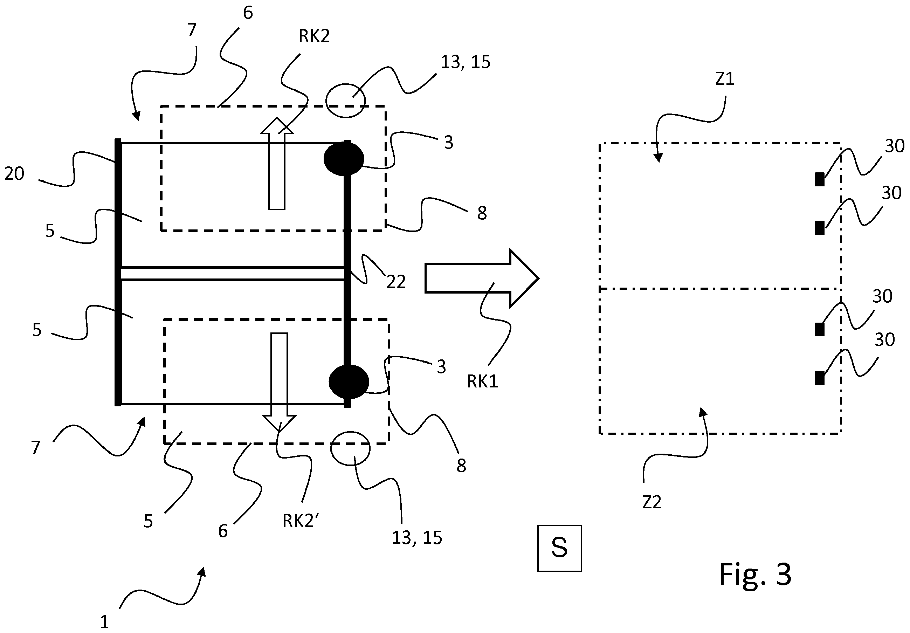

Nach Abziehen der zuoberst auf dem Zwischenlagenstapel 7 angeordneten Zwischenlagen 5 werden diese jeweils in einen Erfassungsbereich einer eigenen Sensorik 13 bewegt, welche vorliegend als Lichtschranke 15 ausgebildet ist. Ein Sender der jeweiligen Lichtschranke 15 emittiert einen Laserstrahl in vertikaler Richtung nach unten bzw. vorliegend in Richtung der Bildebene. Die Zwischenlagen 5 werden hierbei derart in Richtung der jeweiligen Sensorik 13 bzw. in Richtung der jeweiligen Lichtschranke 15 geführt, dass sie jeweils via eine ihrer Außenkanten 6, wie in Figur 3 gezeigt und nachfolgend noch beschrieben, in den Erfassungsbereich der jeweiligen Sensorik 13 eintreten und den Laserstrahl unterbrechen. Die Außenkanten 6 der Zwischenlagen 5 schließen an die Vorderkante 8 und an die Rückkante 9 der jeweiligen Zwischenlage 5 an. Somit werden Zwischenlagen 5 eines ersten Zwischenlagenstapels 7 in den Erfassungsbereich einer ersten Sensorik 13 bzw. in den Erfassungsbereich einer ersten Lichtschranke 15 bewegt, während Zwischenlagen 5 eines zweiten Zwischenlagenstapels 7 in den Erfassungsbereich einer zweiten Sensorik 13 bzw. in den Erfassungsbereich einer zweiten Lichtschranke 15 bewegt werden.

Zu erkennen sind weiter zwei Anschläge 20 und 22, die zur vorderbündigen Ausrichtung von Zwischenlagen 5 beider Zwischenlagenstapel 7 zugestellt werden können. Eine Bewegung der Anschläge 20 und 22 wird durch die Steuerungseinrichtung S vorgegeben. Die Anschläge 20 und 22 sind parallel zueinander orientiert. Werden die Anschläge 20 und 22 zugestellt, verringert sich der relative Abstand der beiden Anschläge 20 und 22 zueinander.

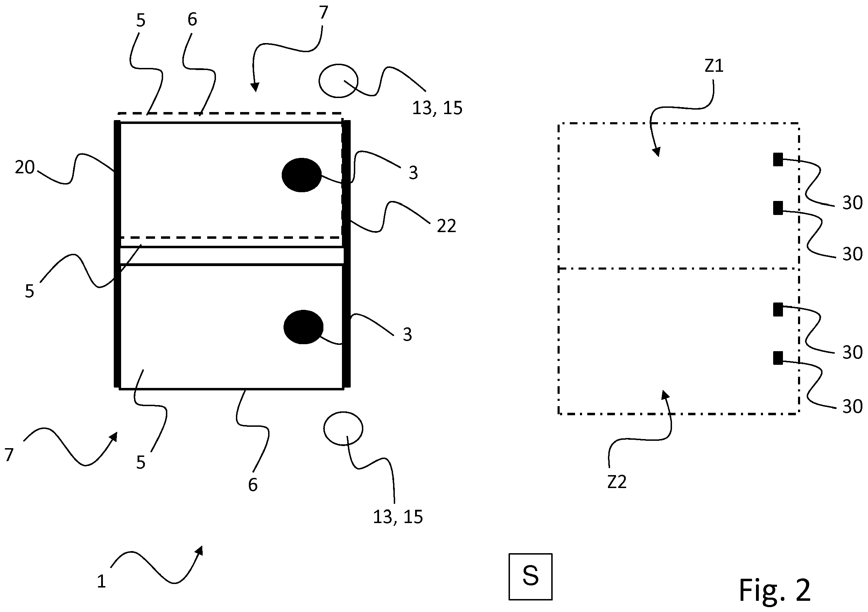

Figur 2 zeigt die schematische Ansicht der Ausführungsform einer erfindungsgemäßen Vorrichtung 1 aus Figur 1 und verdeutlicht einen zweiten Schritt einer Ausführungsform eines erfindungsgemäßen Verfahrens. Wie eine Zusammenschau der Figuren 1 und 2 erkennen lässt, haben die Anschläge 20 und 22 eine Zustellbewegung ausgeführt bzw. sich aufeinander zu bewegt und stehen mit den Vorderkanten 8 und Rückkanten 9 (vgl. Figur 1) mehrerer zuoberst auf den Zwischenlagenstapeln 7 angeordneter Zwischenlagen 5 in Kontakt.

Die Vorderkanten 8 und Rückkanten 9 (vgl. Figur 1) von Zwischenlagen 5 des jeweiligen Zwischenlagenstapels 7 sind somit bündig zueinander ausgerichtet. Während die in Phantomlinien dargestellte Zwischenlage 5 mit ihrer Außenkante 6 vom Zwischenlagenstapel 7 seitlich übersteht, liegt die oberste Zwischenlage 5 des weiteren Zwischenlagenstapels 7 mit ihrer Außenkante 6 bündig auf ihrem Zwischenlagenstapel 7 auf. Die Zwischenlagen 5 wurden zeitlich nach Zustellbewegung der Anschläge 20 und 22 von den Saug- und/oder Greifeinrichtungen 3 erfasst und sind im Verfahrensschritt gemäß Figur 2 nun an den Saug- und/oder Greifeinrichtungen 3 fixiert. Die Saug- und/oder Greifeinrichtungen 3 besitzen hierzu in den Figuren vorliegender Patentanmeldung nicht mit dargestellte Saugköpfe, mittels welcher die Zwischenlagen 5 mit Unterdruck beaufschlagt werden und welche die Zwischenlagen 5 temporär an den Saug- und/oder Greifeinrichtungen 3 festsetzen.

Figur 3 zeigt die schematische Ansicht der Ausführungsform einer erfindungsgemäßen Vorrichtung 1 aus den Figuren 1 und 2 und verdeutlicht einen dritten Schritt einer Ausführungsform eines erfindungsgemäßen Verfahrens. Der dritte Schritt gemäß Figur 3 folgt zeitlich auf den zweiten Schritt gemäß Figur 2. Die Saug- und/oder Greifeinrichtungen 3 werden nun in Richtung ihrer jeweils zugeordneten Sensorik 13 bzw. in Richtung ihrer jeweils zugeordneten Lichtschranke 15 bewegt. Hierzu bewegen sich die Saug- und/oder Greifeinrichtungen 3 jeweils zeitsynchron mit einer ersten Richtungskomponente RK1, die in Richtung des jeweiligen Zielortes Z1 bzw. Z2 weist und mit einer zweiten Richtungskomponente RK2 bzw. RK2', die lotrecht zur ersten Richtungskomponente RK2 orientiert ist. Die Richtungskomponenten RK2 und RK2' sind hierbei entgegengesetzt zueinander orientiert, um die Zwischenlagen 5 des ersten und des zweiten Zwischenlagenstapels 7 in den Erfassungsbereich ihrer jeweiligen Sensorik 13 führen zu können. Durch die lotrecht zueinander orientierten Richtungskomponenten RK1 und RK2 bzw. RK1 und RK2' bewegen sich beide Saug- und/oder Greifeinrichtungen 3 schräg von ihrem jeweils zugeordneten Zwischenlagenstapel 7 weg und in Richtung der jeweiligen Sensorik 13 bzw. Lichtschranke 15. Aufgrund der entgegengesetzten Orientierung der zweiten Richtungskomponenten RK2 und RK2' wird der Abstand zwischen den Saug- und/oder Greifeinrichtungen 3 bei Bewegung der Zwischenlagen 5 in Richtung der jeweiligen Sensorik 13 vergrößert.

Die Zwischenlagen 5 treten zunächst mit ihrer Außenkante 6 in einen Erfassungsbereich der jeweiligen Sensorik 13 bzw. Lichtschranke 15 ein bzw. unterbrechen zunächst mittels ihrer Außenkanten 6 einen durch die Sensorik 13 emittierten Laserstrahl. Da die Sensorik 13 mit der Steuerungseinrichtung S in Verbindung steht, kann die Steuerungseinrichtung S unter Zuhilfenahme der von der jeweiligen Sensorik 13 übermittelten Informationen Rückschlüsse zur relativen Position der an der jeweiligen Saug- und/oder Greifeinrichtung 3 fixierten Zwischenlage 5 ziehen. Ein seitliches Überstehen der Zwischenlage 5 vom jeweiligen Zwischenlagenstapel 7 (vgl. Figur 2) wird hierbei indirekt erkannt. Um die Zwischenlagen 5 auch bei seitlichem Überstand vom Zwischenlagenstapel 7 gemäß Figur 2 mit vorbestimmter Position an ihren jeweiligen Zielort Z1 bzw. Z2 überführen zu können, kann die Steuerungseinrichtung S die Saug- und/oder Greifeinrichtungen 3 mit bestimmter Bewegungsrichtung und unter Berücksichtigung der optischen Erfassung durch die Sensorik 13 steuern, so dass die Zwischenlagen 5 ihren jeweiligen Zielort Z1 bzw. Z2 mit vorbestimmter Position erreichen.

Figur 3 lässt darüber hinaus erkennen, dass die Anschläge 20 und 22 während eines Abziehens der Zwischenlagen 5 von ihrem jeweiligen Zwischenlagenstapel 7 weiterhin zugestellt sind. Die Zwischenlagen 5 können somit während ihres Abziehens gleitend über einen Anschlag 22 hinwegbewegt werden, was ein Trennen der jeweiligen Zwischenlage 5 von ihrem Zwischenlagenstapel 7 erleichtert. Zudem wird hierdurch das Risiko einer Deorientierung weiterer Zwischenlagen 5 des Zwischenlagenstapels 7 vermindert. Der zur vorderbündigen Ausrichtung von Zwischenlagen 5 vorgesehene Anschlag 22 kann hierbei die Zwischenlagenstapel 7 in vertikaler Richtung überragen.

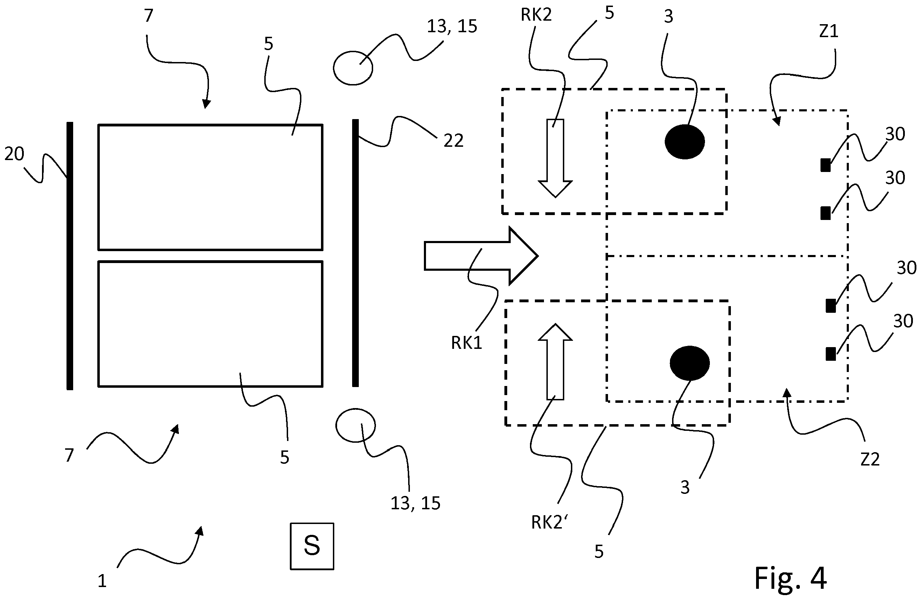

Figur 4 zeigt die schematische Ansicht der Ausführungsform einer erfindungsgemäßen Vorrichtung 1 aus den Figuren 1 bis 3 und verdeutlicht einen vierten Schritt einer Ausführungsform eines erfindungsgemäßen Verfahrens. Die Steuerungseinrichtung S gibt, wie vorhergehend bereits erwähnt, die Bewegungen der Saug- und/oder Greifeinrichtungen 3 derart vor, dass die Zwischenlagen 5 ihren jeweiligen vorbestimmten Zielort Z1 bzw. Z2 mit vorbestimmter Position erreichen. Die Richtungskomponenten RK2 und RK2' weisen aufeinander zu, so dass sich die beiden Zwischenlagen 5 einander nähern. Die Richtungskomponente RK1 der Bewegung ist weiterhin für beide Zwischenlagen 5 bzw. für beide Saug- und/oder Greifeinrichtungen 3 ausgebildet, so dass sich die Zwischenlagen 5 in Richtung ihres jeweiligen Zielortes Z1 bzw. Z2 bewegen. Die Klemmelemente 30 verweilen in ihrer Position und warten auf das Eintreffen der Zwischenlagen 5 an ihrem jeweiligen Zielort Z1 bzw. Z2.

Die beiden Anschläge 20 und 22 haben sich voneinander entfernt und können zeitlich vor Entgegennahme einer weiteren Zwischenlage 5 von den Zwischenlagenstapeln 7 die Zwischenlagen 5 der Zwischenlagenstapel 7 erneut vorderbündig ausrichten. Ein zur vorderbündigen Ausrichtung von Zwischenlagen 5 vorgesehener Anschlag 22 und ein zur rückbündigen Ausrichtung von Zwischenlagen 5 vorgesehener Anschlag 20 treten hierbei sowohl mit Zwischenlagen 5 eines ersten der beiden Zwischenlagenstapel 7 als auch mit Zwischenlagen 5 eines zweiten der beiden Zwischenlagenstapel 7 in Oberflächenkontakt.

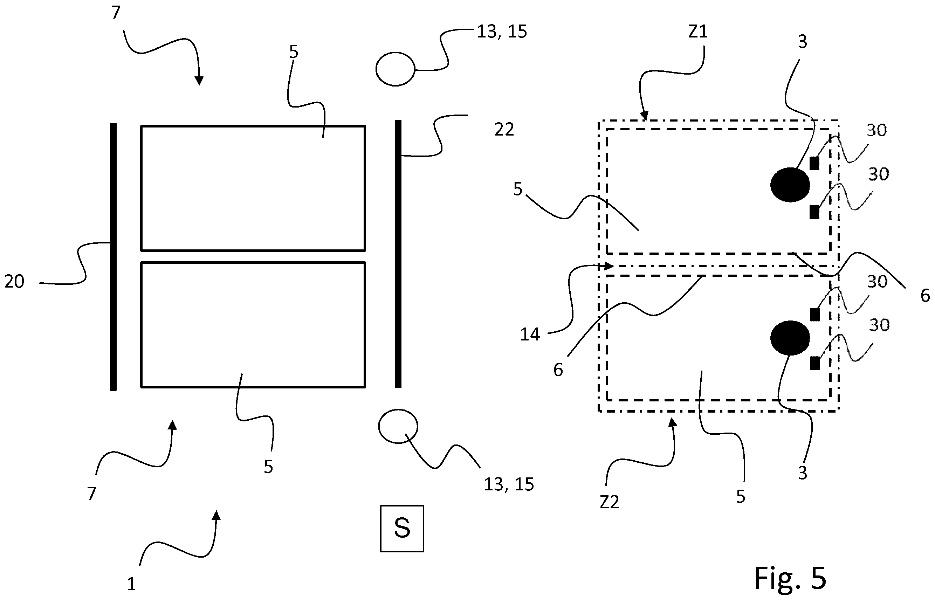

Figur 5 zeigt die schematische Ansicht der Ausführungsform einer erfindungsgemäßen Vorrichtung 1 aus den Figuren 1 bis 4 und verdeutlicht einen vierten Schritt einer Ausführungsform eines erfindungsgemäßen Verfahrens. Hierbei haben die Zwischenlagen 5 nun ihren jeweiligen Zielort Z1 bzw. Z2 mit vorbestimmter Position erreicht. Da die Bewegungsbahn der Saug- und/oder Greifeinrichtungen 3 in Richtung des jeweiligen Zielortes Z1 bzw. Z2 unter Berücksichtigung der optischen Erfassung der Außenkante 6 der jeweiligen Zwischenlage 5 über die Steuerungseinrichtung S vorgegeben wird, können die Zwischenlagen 5 den jeweiligen Zielort Z1 bzw. Z2 sehr genau mit bestimmter Position erreichen.

Sind die Zwischenlagen 5, wie in Figur 5 gezeigt, an ihrem jeweiligen Zielort Z1 bzw. Z2 angelangt, so werden diese von den Klemmelementen 30 entgegengenommen und in Richtung eines Übergabeplatzes, welcher in den Figuren vorliegender Patentanmeldung nicht mit dargestellt ist, gezogen. Die Verbindung zwischen den Saug- und/oder Greifeinrichtung 3 und den Zwischenlagen 5 kann nach Entgegennahme der Zwischenlagen 5 durch die Klemmelemente 30 gelöst werden. Die Saug- und/oder Greifeinrichtung 3 werden hierauf folgend auf direktem Wege in Richtung der Zwischenlagenstapel 7 zurückbewegt, um von dort jeweils eine weitere Zwischenlage 5 entgegenzunehmen und zunächst in Richtung der jeweiligen Sensorik 13 bzw. der Lichtschranke 15, wie unter Zusammenschau der Figuren 1 bis 3 verdeutlicht, zu bewegen.

Darüber hinaus zeigt Figur 5 einen Spalt bzw. Abstand 14, welcher zwischen den einzelnen Zwischenlagen 5 am Zielort Z1 bzw. Z2 ausgebildet ist. Da mittels des Verfahrens bzw. mittels der Vorrichtung 1 Zwischenlagen 5 sehr präzise bzw. mit vorgegebener Soll-Position an ihren Zielort Z1 bzw. Z2 überführt werden, kann eine gewünschte Dimensionierung des Spaltes bzw. Abstandes 14 sehr genau eingehalten werden. Über den Verlauf von benachbarten Außenkanten 6 der in den Zielorten Z1 und Z2 befindlichen Zwischenlagen 5 ist der Abstand 14 konstant ausgebildet. In weiteren denkbaren Ausführungsformen kann auch vorgesehen sein, dass kein Spalt bzw. Abstand 14 ausgebildet ist und die Zwischenlagen 15 im Zielort Z1 bzw. Z2 direkt aneinander angrenzen und ggf. miteinander in Kontakt stehen.

### Bezugszeichenliste

- 1: Vorrichtung
- 3: Saug- und/oder Greifeinrichtung
- 5: Zwischenlage
- 6: Außenkante
- 7: Zwischenlagenstapel
- 8: Vorderkante
- 9: Rückkante
- 13: Sensorik
- 14: Abstand
- 15: Lichtschranke
- 20: Anschlag
- 22: Anschlag
- 30: Klemmelemente

- RK1: Erste Richtungskomponente
- RK2: Zweite Richtungskomponente
- S: Steuerungseinrichtung
- Z1: Zielort
- Z2: Zielort

## Patentansprüche

1. Verfahren zum Umgang mit einzelnen Zwischenlagen (5), bei welchem Verfahren
- von wenigstens zwei separaten Zwischenlagenstapeln (7) jeweils eine einzelne zuoberst auf dem jeweiligen Zwischenlagenstapel (7) angeordnete Zwischenlage (5) abgetrennt wird,
- die von den wenigstens zwei separaten Zwischenlagenstapeln (7) abgetrennten einzelnen Zwischenlagen (5) in einen Erfassungsbereich einer Sensorik (13) bewegt werden, wobei jede der abgetrennten Zwischenlagen (5) in einen Erfassungsbereich einer eigenen Sensorik (13) eintritt und die jeweilige eigene Sensorik (13) eine in Bewegungsrichtung der jeweiligen Zwischenlage (5) verlaufende Außenkante (6) mittels vorzugsweise optischer Erfassung erkennt und wobei
- zeitlich hierauf die abgetrennten einzelnen Zwischenlagen (5) einen jeweiligen Zielort (Z1, Z2) unter Berücksichtigung der jeweiligen vorzugsweise optischen Erfassung anfahren, so dass die Zwischenlagen (5) ihren jeweiligen Zielort (Z1, Z2) mit vorbestimmter Position erreichen, wobei das Verfahren **dadurch gekennzeichnet ist, dass**
- die Zwischenlagen (5) bei der vorzugsweise optischen Erfassung ihrer jeweiligen Außenkante (6) bewegt werden.

2. Verfahren nach Anspruch 1, bei welchem zeitlich vor Abtrennen der einzelnen Zwischenlagen (5) von den wenigstens zwei separaten Zwischenlagenstapeln (7) ihre jeweilige an die Außenkante (6) anschließende Vorderkante (8) und ihre jeweilige an die Außenkante (6) anschließende Rückkante (9) ausgerichtet werden.

3. Verfahren nach Anspruch 2, bei welchem zum Ausrichten mindestens zwei zustellbare Anschläge (20, 22) gegen die Vorder- und Rückkanten (8, 9) mehrerer Zwischenlagen (5) der wenigstens zwei Zwischenlagenstapel (7) geführt werden, so dass hierdurch die mehreren Zwischenlagen (5) des jeweiligen Zwischenlagenstapels (7) bündig zueinander ausgerichtet sind.

4. Verfahren nach Anspruch 3, bei welchem ein zur vorderbündigen Ausrichtung von Zwischenlagen (5) vorgesehener Anschlag (22) und ein zur rückbündigen Ausrichtung von Zwischenlagen (5) vorgesehener Anschlag (20) sowohl mehrere Zwischenlagen (5) eines ersten Zwischenlagenstapels (7) als auch mehrere Zwischenlagen (5) eines zweiten Zwischenlagenstapels (7) bündig zueinander ausrichten.

5. Verfahren nach einem oder mehreren der Ansprüche 1 bis 4, wobei die abgetrennten Zwischenlagen (5) in den Erfassungsbereich der jeweils eigenen Sensorik (13) zeitsynchron mit einer ersten Richtungskomponente (RK1) bewegt werden, die in Richtung des Zielortes (Z1, Z2) weist und mit einer zweiten Richtungskomponente (RK2), die lotrecht zur ersten Richtungskomponente (RK1) orientiert ist.

6. Verfahren nach einem oder mehreren der Ansprüche 1 bis 5, bei welchem die in Bewegungsrichtung der abgetrennten Zwischenlagen (5) verlaufenden Außenkanten (6) jeweils mittels einer Lichtschranke (15) optisch erfasst werden.

7. Verfahren nach Anspruch 5, bei welchem die Lichtschranken (15) zur optischen Erfassung der in Bewegungsrichtung der Zwischenlage (5) verlaufenden Außenkanten (6) einen Laserstrahl emittieren.

8. Verfahren nach einem oder mehreren der Ansprüche 1 bis 7, bei welchem die einzelnen Zwischenlagen (5) beginnend mit der Abtrennung vom jeweiligen Zwischenlagenstapel (7) unterbrechungsfrei bis zum Zielort (Z1, Z2) bewegt werden.

9. Verfahren nach einem oder mehreren der Ansprüche 1 bis 8, bei welchem die Zwischenlagen (5) nach Erreichen des jeweiligen Zielortes (Z1, Z2) zwischen ihren direkt benachbarten Außenkanten (6) einen vorbestimmten Abstand (14) ausbilden, welcher Abstand (14) entlang ihrer direkt benachbarten Außenkanten (6) durchgehend konstant verläuft.

10. Verfahren nach einem oder mehreren der Ansprüche 1 bis 9, bei welchem von den wenigstens zwei separaten Zwischenlagenstapeln (7) einzelne Zwischenlagen (5) zumindest näherungsweise zeitsynchron abgetrennt werden und/oder bei welchem die von den wenigstens zwei separaten Zwischenlagenstapeln (7) abgetrennten Zwischenlagen (5) zumindest näherungsweise zeitsynchron in den Erfassungsbereich der eigenen Sensorik (13) eintreten und/oder bei welchem die abgetrennten einzelnen Zwischenlagen (5) zumindest näherungsweise zeitsynchron ihren jeweiligen Zielort (Z1, Z2) anfahren.

11. Vorrichtung (1) zum Umgang mit einzelnen Zwischenlagen (5) und zur Durchführung eines Verfahren nach einem der Ansprüche 1 bis 10, umfassend
- mindestens zwei unabhängig voneinander bewegbare Saug- und/oder Greifeinrichtung (3) zum Abtrennen einer einzelnen Zwischenlage (5) von einem Zwischenlagenstapel (7) und Überführen der abgetrennten Zwischenlage (5) an einen Zielort (Z1, Z2), wobei jede der mindestens zwei unabhängig voneinander bewegbaren Saug- und/oder Greifeinrichtung (3) zum Abtrennen einer einzelnen Zwischenlage (5) von einem eigenen Zwischenlagenstapel (7) ausgebildet ist,
- eine eigene Sensorik (13) für jede der mindestens zwei Saug- und/oder Greifeinrichtungen (3), über welche eine jeweilige in Bewegungsrichtung der abgetrennten Zwischenlagen (5) verlaufende Außenkante (6) mittels vorzugsweise optischer Erfassung erkennbar ist, sowie
- eine Steuerungseinrichtung (S), die mit den mindestens zwei Saug- und/oder Greifeinrichtungen (3) und ihrer jeweiligen Sensorik (13) in Verbindung steht, wobei von der Steuerungseinrichtung (S) die Bewegungsrichtungen der mindestens zwei Saug- und/oder Greifeinrichtungen (3) unabhängig voneinander und unter Berücksichtigung der vorzugsweise optischen Erfassungen derart vorgebbar sind, dass die Zwischenlagen (5) ihren Zielort (Z1, Z2) jeweils mit vorbestimmter Position erreichen, **dadurch gekennzeichnet, dass** die Steuerungseinrichtung (S) die Bewegung derart steuert, dass die Zwischenlagen (5) bei der vorzugsweise optischen Erfassung ihrer jeweiligen Außenkante (6) bewegt werden.

12. Vorrichtung nach Anspruch 11, bei welcher die eigene Sensorik (13) wenigstens einer der mindestens zwei Saug- und/oder Greifeinrichtungen (3) eine oder mehrere Lichtschranken (15) umfasst.

13. Vorrichtung nach Anspruch 12, bei welcher die eine oder die mehreren Lichtschranken wenigstens einen als Laser ausgebildeten Sender umfassen.

14. Vorrichtung nach einem oder mehreren der Ansprüche 11 bis 13, umfassend wenigstens zwei Anschläge (20, 22), die mittels einer durch die Steuerungseinrichtung (S) initiierten Zustellbewegung zur vorderbündigen Ausrichtung mit mehreren zuoberst auf den Zwischenlagenstapeln (7) angeordneten Zwischenlagen (5) in Kontakt gebracht werden können.

15. Vorrichtung nach einem oder mehreren der Ansprüche 11 bis 14, bei welcher die Steuerungseinrichtung (S) eine Bewegung der mindestens zwei Saug- und/oder Greifeinrichtungen (3) derart steuern kann, dass die Zwischenlagen (5) ihren jeweiligen Zielort (Z1, Z2) zumindest näherungsweise zeitsynchron erreichen.

## Claims

1. A method for handling individual intermediate layers (5), in which method
- an individual intermediate layer (5) is removed from each of at least two separate stacks of intermediate layers (7), the intermediate layer (5) being arranged topmost on the particular stack of intermediate layers (7),
- the individual intermediate layers (5) removed from the at least two separate stacks of intermediate layers (7) are moved into a detection range of a sensor system (13), wherein each of the removed intermediate layers (5) enters into a detection range of a sensor system (13) of its own and the particular own sensor system (13) identifies, preferably by means of optical detection, an outer edge (6) running in the direction of movement of the particular intermediate layer (5), and wherein
- the removed individual intermediate layers (5) subsequently move toward a particular target location (Z1, Z2) with the particular, preferably optical detection being taken into account such that the intermediate layers (5) reach their particular target location (Z1, Z2) in a predetermined position, wherein the method is **characterised in that**
- the intermediate layers (5) are moved during the preferably optical detection of their particular outer edge (6).

2. The method according to claim 1, in which, prior to removing the individual intermediate layers (5) from the at least two separate stacks of intermediate layers (7), the particular front edge (8) of the intermediate layer (5) adjoining its outer edge (6) and the particular back edge (9) of the intermediate layer (5) adjoining its outer edge (6) are aligned.

3. The method according to claim 2, in which, for the purpose of alignment, at least two advanceable stops (20, 22) are guided against the front edges and back edges (8, 9) of a plurality of intermediate layers (5) of the at least two stacks of intermediate layers (7) such that the plurality of intermediate layers (5) of the particular stack of intermediate layers (7) are hereby aligned flush with each other.

4. The method according to claim 3, in which a stop (22) provided for the alignment of intermediate layers (5) flush in front and a stop (20) provided for the alignment of intermediate layers (5) flush in back align both a plurality of intermediate layers (5) of a first stack of intermediate layers (7) and a plurality of intermediate layers (5) of a second stack of intermediate layers (7) flush with each other.

5. The method according to one or more of the claims 1 to 4, wherein the removed intermediate layers (5) are each moved into the detection range of the own sensor system (13) synchronously with a first directional component (RK1), which faces toward the target location (Z1, Z2), and with a second directional component (RK2), which is oriented perpendicular to the first directional component (RK1).

6. The method according to one or more of the claims 1 to 5, in which the outer edges (6) running in the direction of movement of the removed intermediate layers (5) are in each case optically detected by means of a light barrier (15).

7. The method according to claim 5, in which the light barriers (15) for the optical detection of the outer edges (6) running in the direction of movement of the intermediate layer (5) emit a laser beam.

8. The method according to one or more of the claims 1 to 7, in which the individual intermediate layers (5) are moved, starting with the removal from the particular stack of intermediate layers (7), without interruption up to the target location (Z1, Z2).

9. The method according to one or more of the claims 1 to 8, in which the intermediate layers (5) form a predetermined space (14) between their immediately adjacent outer edges (6) after reaching the particular target location (Z1, Z2), which space (14) runs in a continuously constant manner along their immediately adjacent outer edges (6).

10. The method according to one or more of the claims 1 to 9, in which individual intermediate layers (5) are removed at least approximately synchronously from the at least two separate stacks of intermediate layers (7), and/or in which the intermediate layers (5) that have been removed from the at least two separate stacks of intermediate layers (7) enter into the detection range of the own sensor system (13) at least approximately synchronously, and/or in which the removed individual intermediate layers (5) at least approximately synchronously move toward their particular target location (Z1, Z2).

11. An apparatus (1) for handling individual intermediate layers (5) and for carrying out a method according to one of the claims 1 to 10, the apparatus comprising
- at least two suction devices and/or gripping devices (3) that are movable independently of one another for the purpose of removing an individual intermediate layer (5) from a stack of intermediate layers (7) and transferring the removed intermediate layer (5) to a target location (Z1, Z2), wherein each of the at least two suction devices and/or gripping devices (3) that are movable independently of one another are designed for removing an individual intermediate layer (5) from an own stack of intermediate layers (7),
- an own sensor system (13) for each of the at least two suction devices and/or gripping devices (3), by way of which sensor system (13) a particular outer edge (6) running in the direction of movement of the removed intermediate layers (5) is identifiable by means of preferably optical detection, and
- a control device (S), which is linked to the at least two suction devices and/or gripping devices (3) and their particular sensor system (13), wherein the directions of movement of the at least two suction devices and/or gripping devices (3) are specifiable by the control device (S) independently of one another and with the preferably optical detections being taken into account such that the intermediate layers (5) each reach their target location (Z1, Z2) in a predetermined position, **characterised in that** the control device (S) controls the movement such that the intermediate layers (5) are moved during the preferably optical detection of their particular outer edge (6).

12. The apparatus according to claim 11, in which the own sensor system (13) of at least one of the at least two suction devices and/or gripping devices (3) comprises one or more light barriers (15).

13. The apparatus according to claim 12, in which the one or more light barriers comprise at least one transmitter formed as laser.

14. The apparatus according to one or more of the claims 11 to 13, comprising at least two stops (20, 22), which, for the purpose of aligning the intermediate layers (5) flush in front, can be brought into contact with a plurality of intermediate layers (5) arranged topmost on the stacks of intermediate layers (7) by way of an advance movement initiated by the control device (S).

15. The apparatus according to one or more of the claims 11 to 14, in which the control device (S) can control a movement of the at least two suction devices and/or gripping devices (3) such that the intermediate layers (5) reach their particular target location (Z1, Z2) at least approximately synchronously.

## Revendications

1. Procédé de manipulation de couches intermédiaires (5) individuelles, dans lequel procédé,
- parmi au moins deux piles distinctes de couches intermédiaires (7), respectivement une couche intermédiaire (5) individuelle qui est disposée tout en haut sur la pile de couches intermédiaires (7) respective, est séparée,
- les couches intermédiaires (5) individuelles séparées desdites au moins deux piles distinctes de couches intermédiaires (7) sont déplacées dans une zone de détection d'un ensemble de capteur (13), dans lequel chacune des couches intermédiaires (5) séparées entre dans une zone de détection d'un propre ensemble de capteur (13) et ledit propre ensemble de capteur (13) détecte au moyen de détection de préférence optique un bord extérieur (6) s'étendant dans la direction de déplacement de la couche intermédiaire (5) respective, et dans lequel,
- ensuite, les couches intermédiaires (5) individuelles séparées se dirigent vers un lieu de destination (Z1, Z2) respectif en prenant en considération la détection respective de préférence optique de sorte que les couches intermédiaires (5) atteignent leur lieu de destination (Z1, Z2) respectif à position prédéterminée, le procédé étant **caractérisé par le fait que**
- les couches intermédiaires (5) sont déplacées lors de la détection de préférence optique de leur bord extérieur (6) respectif.

2. Procédé selon la revendication 1, dans lequel, avant de séparer les couches intermédiaires (5) individuelles desdites au moins deux piles distinctes de couches intermédiaires (7), leur bord avant (8) respectif adjacent au bord extérieur (6) et leur bord arrière (9) respectif adjacent au bord extérieur (6) sont alignés.

3. Procédé selon la revendication 2, dans lequel, pour aligner, au moins deux butées (20, 22) aptes à être rapprochées sont guidées contre les bords avant et arrière (8, 9) d'une pluralité de couches intermédiaires (5) desdites au moins deux piles de couches intermédiaires (7) de sorte que, grâce à cela, lesdites plusieurs couches intermédiaires (5) de la pile de couches intermédiaires (7) respective sont alignées de manière à être à fleur les unes par rapport aux autres.

4. Procédé selon la revendication 3, dans lequel une butée (22) prévue pour aligner des couches intermédiaires (5) de manière à être à fleur à l'avant et une butée (20) prévue pour aligner des couches intermédiaires (5) de manière à être à fleur à l'arrière alignent aussi bien une pluralité de couches intermédiaires (5) d'une première pile de couches intermédiaires (7) qu'une pluralité de couches intermédiaires (5) d'une deuxième pile de couches intermédiaires (7) de manière à ce qu'elles soient à fleur les unes par rapport aux autres.

5. Procédé selon l'une ou plusieurs des revendications 1 à 4, dans lequel les couches intermédiaires (5) séparées sont déplacées dans la zone de détection de l'ensemble de capteur (13) qui lui est propre, en synchronisme temporel avec une première composante de direction (RK1) qui montre en direction du lieu de destination (Z1, Z2) et avec une deuxième composante de direction (RK2) qui est orientée perpendiculairement à la première composante de direction (RK1).

6. Procédé selon l'une ou plusieurs des revendications 1 à 5, dans lequel les bords extérieurs (6) s'étendant dans la direction de déplacement des couches intermédiaires (5) séparées sont détectés chacun optiquement au moyen d'un barrage photoélectrique (15).

7. Procédé selon la revendication 5, dans lequel les barrages photoélectriques (15) pour détecter de façon optique les bords extérieurs (6) s'étendant dans la direction de déplacement de la couche intermédiaire (5) émettent un faisceau laser.

8. Procédé selon l'une ou plusieurs des revendications 1 à 7, dans lequel, à partir de la séparation de la pile de couches intermédiaires (7) respective, les couches intermédiaires (5) individuelles sont déplacées sans interruption jusqu'au lieu de destination (Z1, Z2).

9. Procédé selon l'une ou plusieurs des revendications 1 à 8, dans lequel, après avoir atteint le lieu de destination (Z1, Z2) respectif, les couches intermédiaires (5) forment une distance (14) prédéterminée entre leurs bords extérieurs (6) directement adjacents, laquelle distance (14) est continuellement constante le long de leurs bords extérieurs (6) directement adjacents.

10. Procédé selon l'une ou plusieurs des revendications 1 à 9, dans lequel, parmi lesdites au moins deux piles distinctes de couches intermédiaires (7), des couches intermédiaires (5) individuelles sont séparées au moins approximativement en synchronisme temporel, et/ou dans lequel les couches intermédiaires (5) séparées desdites au moins deux piles distinctes de couches intermédiaires (7) entrent dans la zone de détection du propre ensemble de capteur (13) au moins approximativement en synchronisme temporel, et/ou dans lequel les couches intermédiaires (5) individuelles séparées se dirigent au moins approximativement en synchronisme temporel vers leur lieu de destination (Z1, Z2) respectif.

11. Dispositif (1) de manipulation de couches intermédiaires (5) individuelles et de mise en oeuvre d'un procédé selon l'une quelconque des revendications 1 à 10, comprenant
- au moins deux dispositifs d'aspiration et/ou de préhension (3) qui sont déplaçables indépendamment l'un de l'autre et destinés à séparer une couche intermédiaire (5) individuelle d'une pile de couches intermédiaires (7) et à transférer la couche intermédiaire (5) séparée vers un lieu de destination (Z1, Z2), chacun desdits au moins deux dispositifs d'aspiration et/ou de préhension (3) déplaçables indépendamment l'un de l'autre est conçu pour séparer une couche intermédiaire (5) individuelle d'une propre pile de couches intermédiaires (7),
- un propre ensemble de capteur (13) pour chacun desdits au moins deux dispositifs d'aspiration et/ou de préhension (3), par le biais duquel peut être détecté, au moyen de détection de préférence optique, un bord extérieur (6) respectif s'étendant dans la direction de déplacement des couches intermédiaires (5) séparées, ainsi qu'
- un dispositif de commande (S) qui est en communication avec lesdits au moins deux dispositifs d'aspiration et/ou de préhension (3) et leur ensemble de capteur (13) respectif, dans lequel le dispositif de commande (S) peut prédéterminer les directions de déplacement desdits au moins deux dispositifs d'aspiration et/ou de préhension (3) indépendamment l'un de l'autre et en prenant en considération les détections de préférence optiques, de telle sorte que les couches intermédiaires (5) atteignent chacune leur lieu de destination (Z1, Z2) à position prédéterminée, **caractérisé par le fait que** le dispositif de commande (S) commande le mouvement de telle sorte que les couches intermédiaires (5) sont déplacées lors de la détection de préférence optique de leur bord extérieur (6) respectif.

12. Dispositif selon la revendication 11, dans lequel ledit propre ensemble de capteur (13) d'au moins l'un desdits au moins deux dispositifs d'aspiration et/ou de préhension (3) comprend un ou plusieurs barrages photoélectriques (15).

13. Dispositif selon la revendication 12, dans lequel ledit un ou lesdits plusieurs barrages photoélectriques comprennent au moins un émetteur réalisé en tant que laser.

14. Dispositif selon l'une ou plusieurs des revendications 11 à 13, comprenant au moins deux butées (20, 22) qui peuvent être mises en contact avec une pluralité de couches intermédiaires (5) disposées tout en haut sur les piles de couches intermédiaires (7), au moyen d'un mouvement de rapprochement initié par le dispositif de commande (S), pour un alignement affleurant à l'avant.

15. Dispositif selon l'une ou plusieurs des revendications 11 à 14, dans lequel le dispositif de commande (S) peut commander un déplacement desdits au moins deux dispositifs d'aspiration et/ou de préhension (3) de manière à ce que les couches intermédiaires (5) atteignent leur lieu de destination (Z1, Z2) respectif au moins approximativement en synchronisme temporel.
